# EUROPÄISCHE PATENTSCHRIFT

(11) **EP 2 061 953 B1**
(45) Veröffentlichungstag und Bekanntmachung des Hinweises auf die Patenterteilung: **12.01.2011**
(21) Anmeldenummer: 07801309.1
(22) Anmeldetag: 01.09.2007
(51) Int. Cl.: F01D 5/16

(54) **TURBINE EINER GASTURBINE**
TURBINE OF A GAS TURBINE
TURBINE D'UNE TURBINE À GAZ

(30) Priorität: 12.09.2006 DE 102006042647
(43) Veröffentlichungstag der Anmeldung: 27.05.2009
(73) Patentinhaber: MTU Aero Engines GmbH, 80995 München (DE)
(72) Erfinder: KENNEPOHL, Fritz, 85716 Unterschleissheim (DE); KORTE, Detlef, 81543 München (DE)
(86) Internationale Anmeldenummer: PCT/DE2007/001572
(87) Internationale Veröffentlichungsnummer: WO 2008/031395

(56) Entgegenhaltungen:
- EP-A- 1 548 229
- DE-A1- 3 505 823
- GB-A- 1 225 771
- GB-A- 2 026 622
- GB-A- 2 361 035
- JP-A- 59 218 302
- US-A- 1 829 674
- US-A- 4 971 521
- US-A- 6 004 095
- US-A- 6 139 259

## Beschreibung

Die Erfindung betritt eine Turbine einer Gasturbine, insbesondere eines Gasturbinenflugtriebwerks, nach dem Oberbegriff des Anspruchs 1.

Eine Gasturbine, insbesondere ein Gasturbinenflugtriebwerk, verfügt über mindestens einen Verdichter, mindestens eine Brennkammer sowie mindestens eine Turbine. Der von einer Gasturbine im Betrieb abgestrahlte, als Lärm empfundene Schall entsteht größtenteils in der oder jeder Turbine der Gasturbine, weshalb zur Lärmreduktion einer Gasturbine Turbinen mit verringerter Schallabstrahlung von Interesse sind. Hierzu kommen nach dem Stand der Technik in den Austrittskanälen der Turbinen von Gasturbinen als separate Bauteile ausgebildete Schallabsorber zum Einsatz, die ein erhöhtes Gewicht sowie erhöhte Kosten verursachen.

Aus den Dokumenten GB-A-2 361 035 und EP-A-1 548 229 ist es bekannt, in Leit- und Laufschaufeln von Gasturbinen Schallabsorber in Form von Resonatoren anzuordnen. Dabei sind Hohlräume in den Schaufeln über in der Regel jeweils ein Loch mit der Schaufelaußenseite und somit dem Strömungskanal verbunden. Die Hohlräume können beispielsweise in Form von Honigwaben ausgeführt sein. Die Löcher werden zumeist flächig über die Schaufelaußenseite verteilt.

Hiervon ausgehend liegt der vorliegenden Erfindung das Problem zu Grunde, eine neuartige Turbine einer Gasturbine mit verringerter Schallabstrahlung zu schaffen, die das schaufelintegrierte Absorberprinzip weiter verbessert. Dieses Problem wird durch eine Turbine gemäß Anspruch 1 gelöst. Erfindungsgemäß sind die Löcher in Form mindestens eines Streifens angeordnet, der sich in Radialrichtung über mehrere der Hohlräume erstreckt, wobei in jeden Hohlraum mehrere Löcher eines Streifens münden.

Mit der erfindungsgemäßen Konstruktion einer Turbine kann der von derselben im Betrieb abgestrahlte Schall effektiv reduziert werden, ohne das Gewicht der Gasturbine zu erhöhen. Es entstehen so gut wie keine zusätzlichen Kosten. Des Weiteren können bereits in der Praxis eingesetzte Turbinen problemlos bei der Wartung bzw. Instandsetzung nachgerüstet werden.

Vorzugsweise sind die Löcher ausschließlich an der Saugseite in die Schaufelwand der Laufschaufeln und/oder Leitschaufeln in Form mindestens eines sich in Radialrichtung erstreckenden Streifens eingebracht.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: einen Querschnitt durch eine Schaufel einer erfindungsgemäßen Turbine nach einem ersten Ausführungsbeispiel der Erfindung;
- Fig. 2: einen Querschnitt durch eine Schaufel einer erfindungsgemäßen Turbine nach einem zweiten Ausführungsbeispiel der Erfindung;
- Fig. 3: eine Seitensicht der Schaufel gemäß Fig. 2;
- Fig. 4: einen Querschnitt durch eine Schaufel in einer nicht zur Erfindung gehörenden Ausführungsform
- Fig. 5: einen Querschnitt durch eine Schaufel einer erfindungsgemäßen Turbine nach einem dritten Ausführungsbeispiel der Erfindung; und
- Fig. 6: einen Gusskern zur Herstellung einer Schaufel einer erfindungsgemäßen Turbi- ne.

Die hier vorliegende Erfindung betrifft eine Turbine einer Gasturbine, insbesondere eines Gasturbinenflugtriebwerks. Gasturbinen verzügen über mindestens einen Verdichter, mindestens eine Brennkammer sowie mindestens eine Turbine.

Eine Turbine umfasst einen mindestens einen Laufschaufelkranz aufweisenden Rotor sowie einen mindestens einen Leitschaufelkranz aufweisenden Stator, wobei zwischen zwei benachbarten, feststehenden Leitschaufelkränzen jeweils ein rotorseitiger Laufschaufelkranz positioniert ist. Die Laufschaufelkränze des Rotors werden von Laufschaufeln und die Leitschaufelkränze des Stators von Leitschaufeln gebildet, wobei sowohl die Laufschaufeln als auch die Leitschaufeln von Turbinen als Hohlschaufeln ausgebildet sein können. Derartige Hohlschaufeln weisen mindestens einen Hohlraum auf.

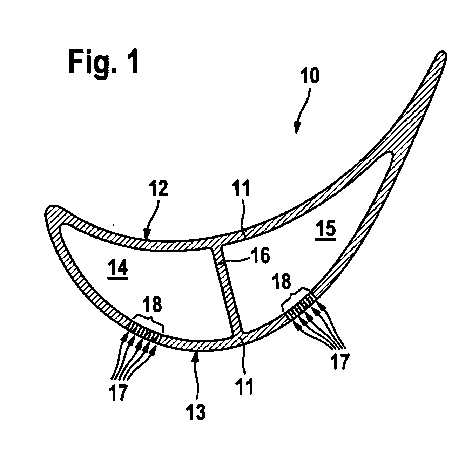

Fig. 1 zeigt einen Querschnitt durch eine als Hohlschaufel 10 ausgebildete, rotorseitige Laufschaufel einer erfindungsgemäßen Turbine, wobei gemäß Fig. 1 die Hohlschaufel 10 eine Schaufelwand 11 aufweist, die eine Druckseite 12 und eine Saugseite 13 der Laufschaufel 10 begrenzt. Im Ausführungsbeispiel der Fig. 1 verfügt die als Hohlschaufel 10 ausgebildete Laufschaufel über zwei Hohlräume 14 und 15, die durch einen sich zwischen der Druckseite 12 und der Saugseite 13 erstreckenden Steg 16 voneinander getrennt sind und sich vorzugsweise über die gesamte radiale Höhe der Laufschaufel 10 erstrecken.

Im Ausführungsbeispiel der Fig. 1 sind in die Schaufelwand 11 im Bereich der Saugseite 13 Löcher 17 eingebracht, welche die Hohlräume 14 und 15 der Hohlschaufel 10 mit der Umgebung derselben verbinden, sodass die Hohlräume 14 und 15 der Hohlschaufel 10 als Resonator bzw. Schallabsorber nutzbar sind und so den während des Betriebs der Turbine nach außen abgestrahlten Schall minimieren.

Die Löcher 17 sind in Form mindestens eines sich in Radialrichtung der Hohlschaufel 10 und damit der Hohlräume 14, 15 erstreckenden Streifens 18 in die Schaufelwand 11 im Bereich der Saugseite 13 eingebracht, wobei gemäß Fig. 1 sowohl im Bereich des Hohlraums 14 als auch im Bereich des Hohlraums 15 jeweils ein solcher Streifen 18 in die Seitenwand 11 eingebracht ist. Ein jeder dieser Streifen besteht aus einer Vielzahl nebeneinander sowie übereinander angeordneter Löcher 17.

Die Breite der Streifen 18, das Volumen der Hohlräume 14 und 15 sowie die von den Löchern 17 der Streifen 18 definierte Querschnittsfläche sind zur Erzielung einer optimierten Impedanz des jeweiligen Resonators bzw. Schallabsorbers, der von den Hohlräumen 14 und 15 gebildet wird, aufeinander abgestimmt. Hierdurch kann eine optimierte Schallabsorbtion an den Hohlschaufeln erreicht werden.

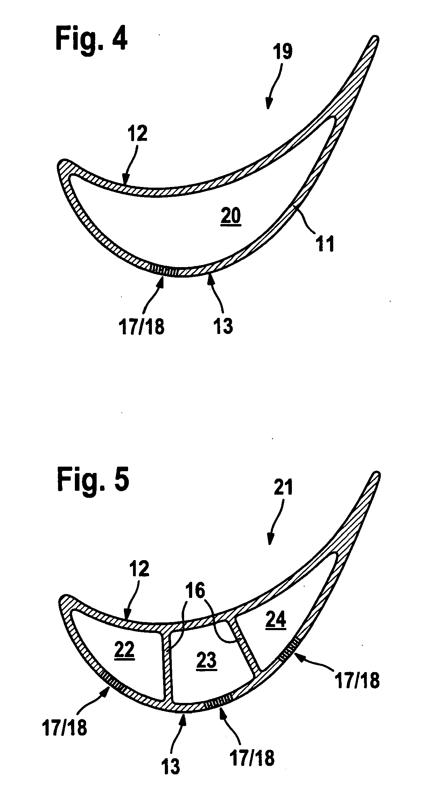

Im Ausführungsbeispiel der Fig. 1 verfügt die als Hohlschaufel 10 ausgebildete Laufschaufel über im Querschnitt zwei nebeneinander angeordnete Hohlräume 14 und 15, die sich wie bereits erwähnt vorzugsweise über die gesamte radiale Höhe der Hohlschaufel 10 erstreckt. Die Anzahl der im Querschnitt nebeneinander angeordneten Hohlräume ist jedoch beliebig. So zeigt Fig. 4 eine als Hohlschaufel 19 ausgebildete Laufschaufel einer Turbine, die über lediglich einen Hohlraum verfügt und somit nicht zum Gegenstaund des Erfindung gehört. Fig. 5 zeigt eine Laufschaufel 21 einer Turbine, die über drei nebeneinander angeordnete Hohlräume 22, 23 und 24 verfügt.

Da die Laufschaufeln 19, 21 der Fig. 4, 5 hinsichtlich aller übrigen Details jedoch mit der Laufschaufel 10 der Fig. 1 übereinstimmen, werden zur Vermeidung unnötiger Wiederholungen für gleiche Baugruppen gleiche Bezugsziffern verwendet, sodass auf die obigen Ausführungen verwiesen werden kann.

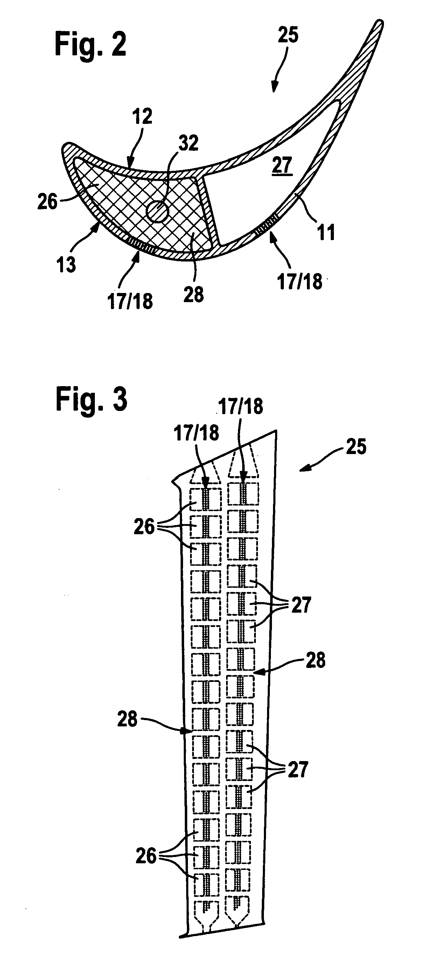

Fig. 2 und 3 zeigen eine weitere Variante einer als Hohlschaufel 25 ausgebildeten Laufschaufel einer Turbine, die wie die Hohlschaufel 10 der Fig. 1 über im Querschnitt gesehen, zwei nebeneinander angeordnete Hohlräume 26 und 27 verfügt, wobei sich diese Hohlräume 26 und 27 jedoch nicht über die gesamte radiale Höhe der Hohlschaufel 25 erstrecken, sondern vielmehr über die radiale Höhe derselben gesehen mehrere solcher Hohlräume 26 und 27 übereinander angeordnet sind, die voneinander durch senkrecht zur Radialrichtung der Turbine verlaufende Wände 28 getrennt sind. Hierdurch kann eine Anpassung der als Resonator bzw. Schallabsorber dienenden Hohlräume 26 und 27 an die Frequenz des zu absorbierenden Schalls erfolgen.

Wie insbesondere Fig. 3 entnommen werden kann, erstrecken sich die Streifen 18 aus den Löchern 17 über die radiale Höhe der Hohlschaufel 25, wobei die Streifen 18 im Bereich der Wände 28, welche die in Radialrichtung übereinander angeordneten Hohlräume 26 bzw. 27 voneinander trennen, unterbrochen sind.

Im Ausführungsbeispiel der Fig. 1 bis 5 erstreckt sich an der Saugseite 13 im Bereich jedes Hohlraums ein Streifen 18 aus Löchern 17. Im Bereich jedes Hohlraums können sich auch mehrere parallel zueinander verlaufende Streifen erstrecken.

In den Ausführungsbeispielen der Fig. 1 bis 5 sind die gezeigten Hohlschaufeln als rotorseitige Laufschaufeln ausgebildet. Es sei darauf hingewiesen, dass auch statorseitige Leitschaufeln wie im Zusammenhang mit den Laufschaufeln beschrieben wurde, ausgeführt sein können.

Wie oben ausgeführt, umfasst eine Turbine üblicherweise mehrere rotierende Laufschaufelkränze sowie mehrere feststehende Leitschaufelkränze. Vorzugsweise ist im Bereich mindestens eines Laufschaufelkranzes und/oder im Bereich mindestens eines Leitschaufelkranzes jede Laufschaufel und/oder jede Leitschaufel nach den obigen Prinzipien ausgestaltet. Dabei werden insbesondere solche Laufschaufelkränze und/oder Leitschaufelkränze nach den obigen Konstruktionsprinzipien ausgeführt, in welchen der größte bzw. lärmrelevanteste Schall erzeugt wird.

Die Leitschaufelkränze bzw. Laufschaufelkränze, in welchen der größte bzw. lärmrelevanteste Schall erzeugt wird, können bei einem Turbinenversuch über modale Messtechnik identifiziert werden.

Die im Sinne der Erfindung ausgeführten Laufschaufeln bzw. Leitschaufeln einer Turbine bewirken sowohl eine Verminderung der Schallerzeugung an der Quelle der Schallentstehung durch Verminderung der durch aerodynamische Wechselwirkungen zwischen Rotor und Stator hervorgerufenen, instationären Drücke auf der Schaufeloberfläche als auch eine Vergrößerung der Schalldämpfung bei der Ausbreitung des von weiter stromaufwärts liegenden Turbinenschaufeln bzw. Turbinenstufen erzeugten Schalls.

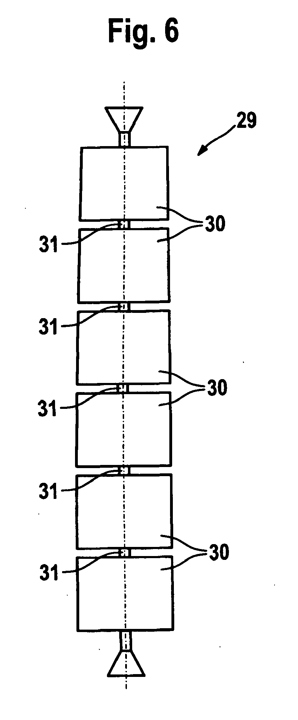

Die als Hohlschaufeln ausgebildeten Leitschaufeln bzw. Laufschaufeln einer Turbine werden gusstechnisch, insbesondere in Feingusstechnik, zusammen mit den Hohlräumen ausgebildet. Zur Herstellung einer Hohlschaufel gemäß Fig. 2 und 3, die in Radialrichtung gesehen mehrere voneinander getrennte Hohlräume aufweist, kann der in Fig. 6 dargestellte Gusskern 29 Verwendung finden. Der Gusskern 29 der Fig. 6 umfasst mehrere übereinander angeordnete Teilkerne 30, welche der Ausbildung der Hohlräume dienen, wobei die Teilkerne 30 über Stege 31 miteinander verbunden sind. Die Stege 31 bilden in den beim Gießen ausgebildeten Wänden 28, welche die Hohlräume der Schaufel voneinander trennen, Ausnehmungen aus, wobei diese Ausnehmungen nach dem Gießen verschlossen werden, sodass sämtliche Hohlräume vollständig voneinander abgetrennt sind. Das Verschließen der Löcher in den Wänden 28 kann durch Bolzen 32 (siehe Fig. 2) erfolgen, die z.B. in die Ausnehmungen eingesteckt bzw. eingeschraubt sind.

## Patentansprüche

1. Turbine einer Gasturbine, insbesondere eines Grasturbinenflugtriebwerks, mit einem mindestens einen Laufschaufelkranz aufweisenden Rotor und mit einem mindestens einen Leitschaufelkranz aufweisenden Stator, wobei Laufschaufeln mindestens eines Laufschaufelkranzes und/oder Leitschaufeln mindestens eines Leitschaufelkranzes als Hohlschaufeln ausgebildet sind, die mehrere Hohlräume aufweisen, wobei an mindestens einer Seite mindestens einer Hohlschaufel (10; 25; 21) in eine Schaufelwand (11) Löcher (17) eingebracht sind, die mehrere Hohlräume (14, 15; 26, 27; 22, 23, 24) mit der Umgebung der Hohlschaufel unter Bildung von Resonatoren bzw, Schallabsorbern zur Reduktion des von der Turbine im Betrieb abgestrahlten Schalls verbinden, und wobei die Hohlschaufel in Radialrichtung mehrere voneinander getrennte Hohlräume aufweist,
**dadurch gekennzeichnet,**
**dass** die Löcher (17) mindestens einen Streifen (18) bilden, der sich in Radialrichtung der jeweiligen Schaufelwand (11) über mehrere Hohlräume erstreckt, und dass in jeden Hohlraum mehrere Löcher (17) eines Streifens (18) münden.

2. Turbine nach Anspruch 1,
**dadurch gekennzeichnet,**
**dass** die Löcher (17) ausschließlich an der Saugseite (13) in die Schaufelwand (11) der Hohlschaufel eingebracht sind.

3. Turbine nach Anspruch 1 oder 2,
**dadurch gekennzeichnet,**
**dass** der oder jeder aus den Löchern (17) gebildete Streifen (18) im Bereich von Wänden (28), welche die in Radialrichtung übereinander angeordneten Hohlräume (26, 27) voneinander begrenzen, unterbrochen ist.

4. Turbine nach einem der Ansprüche 1 bis 3,
**dadurch gekennzeichnet,**
**dass** die Hohlschaufel (10; 25; 19; 21) zusammen mit den Hohlräumen derselben in Gusstechnik, insbesondere in Feingusstechnik, hergestellt ist.

5. Turbine nach einem der Ansprüche 1 bis 4,
**dadurch gekennzeichnet,**
**dass** dann, wenn dieselbe mehrere Laufschaufelkränze und Leitschaufelkränze aufweist, Laufschaufeln mindestens eines Laufschaufelkranzes und/oder Leitschaufeln mindestens eines Leitschaufelkranzes nach einem der obigen Ansprüche ausgebildet sind, im Bereich derer die Turbine den größten bzw. lärmrelevantesten Schall erzeugt.

## Claims

1. A turbine of a gas turbine, in particular of a gasturbine aircraft engine, having a rotor that has at least one moving blade ring and having a stator that has at least one guide blade ring, wherein moving blades of at least one moving blade ring and/or guide blades of at least one guide blade ring are formed as hollow blades that have a plurality of cavities, wherein on at least one side of at least one hollow blade (10; 25; 21) holes (17) are introduced into a blade wall (11) that connect a plurality of cavities (14, 15; 26, 27; 22, 23, 24) with the surrounding environment of the hollow blade, forming resonators or sound-absorbers for the reduction of the sound that is radiated by the turbine during operation, and wherein the hollow blade has a plurality of cavities that are separated from each other in the radial direction,
**characterised in that**
the holes (17) form at least one strip (18) that extends in the radial direction of the respective blade wall (11) over a plurality of cavities, and **in that** a plurality of holes (17) of a strip (18) open into each cavity.

2. A turbine according to claim 1,
**characterised in that**
the holes (17) are introduced into the blade wall (11) of the hollow blade exclusively on the suction side (13).

3. A turbine according to claim 1 or 2,
**characterised in that**
the or each strip (18) that is formed from the holes (17) is interrupted in the region of walls (28) which delimit from each other the cavities (26, 27) that are arranged one above the other in the radial direction.

4. A turbine according to one of claims 1 to 3,
**characterised in that**
the hollow blade (10; 25; 19; 21) together with the cavities of the same is produced using casting techniques, in particular precision-casting techniques.

5. A turbine according to one of claims 1 to 4,
**characterised in that**
if the turbine has a plurality of moving blade rings and guide blade rings, moving blades of at least one moving blade ring and/or guide blades of at least one guide blade ring in whose region the turbine generates the greatest sound or the sound that is most relevant in terms of noise are formed according to one of the above-mentioned claims.

## Revendications

1. Turbine d'une turbine à gaz, en particulier d'un groupe motopropulseur à turbine à gaz, comprenant un rotor présentant au moins une couronne d'aubes mobiles et un stator présentant au moins une couronne d'aubes fixes, des aubes mobiles d'au moins une couronne d'aubes mobiles et/ou des aubes fixes d'au moins une couronne d'aubes fixes étant conçues sous forme d'aubes creuses, lesquelles présentent plusieurs cavités, des trous (17) étant introduits sur au moins un côté d'au moins une aube creuse (10 ; 25 ; 21) dans une paroi d'aube (11), lesquels trous relient plusieurs cavités (14, 15 ; 26, 27 ; 22, 23, 24) à l'environnement de l'aube creuse en formant des résonateurs ou absorbeurs phoniques destinés à réduire le son diffusé par la turbine pendant le service, et l'aube creuse présentant dans le sens radial plusieurs cavités séparées les unes des autres, **caractérisée en ce que** les trous (17) forment au moins une bande (18), qui s'étend dans le sens radial de la paroi d'aube (11) respective sur plusieurs cavités, et **en ce que** plusieurs trous (17) d'une bande (18) débouchent dans chaque cavité.

2. Turbine selon la revendication 1, **caractérisée en ce que** les trous (17) sont introduits exclusivement sur le côté aspiration (13) dans la paroi d'aube (11) de l'aube creuse.

3. Turbine selon la revendication 1 ou 2, **caractérisée en ce que** la ou chaque bande (18) formée à partir des trous (17) est interrompue dans la zone de parois (28) qui délimitent les unes des autres les cavités (26, 27) disposées dans le sens radial les unes au-dessus des autres.

4. Turbine selon l'une quelconque des revendications 1 à 3, **caractérisée en ce que** l'aube creuse (10 ; 25 ; 19 ; 21) est fabriquée conjointement avec les cavités de l'aube par technique de coulée, en particulier par technique de coulée de précision.

5. Turbine selon l'une quelconque des revendications 1 à 4, **caractérisée en ce que**, dans les cas où la même turbine présente plusieurs couronnes d'aubes mobiles et couronnes d'aubes fixes, des aubes mobiles d'au moins une couronne d'aubes mobiles et/ou des aubes fixes d'au moins une couronne d'aubes fixes sont conçues selon l'une quelconque des revendications précédentes, aubes dans la zone desquelles la turbine génère le son maximum ou le son important au niveau du bruit.
